# EUROPEAN PATENT APPLICATION

(11) **EP 3 561 677 A1**
(43) Date of publication of application: **30.10.2019**
(21) Application number: 18169728.5
(22) Date of filing: 27.04.2018
(51) Int. Cl.: G06F 11/36

(54) **METHOD FOR TESTING A PROGRAM**

(71) Applicant: Siemens Aktiengesellschaft, 80333 München (DE)
(72) Inventor: Cramer, Dieter, 81543 München (DE); Fiege, Ludger, 85567 Grafing (DE); Fröhlich, Joachim, 85614 Kirchseeon (DE); Rothbauer, Stefan, 86156 Augsburg (DE); Stückjürgen, Christoph, 80807 München (DE)

(57) **Abstract**

The present invention relates to a method for testing a program on a computer, the program comprising a plurality of instructions to be executed by a processing unit of the computer, the method comprising the steps of: a) running at least one test on the program and generating at least one test result; b) making at least one decision by evaluating the program depending on the at least one test result; wherein c) the at least one decision concerns a modification of at least one feature of the program, a release of the program or a removal of the program, if the decision concerns the modification of the program, modifying the at least one feature of the program based on the at least one test result, repeating steps a) - c) on the modified program until the decision concerns a release or a removal of the program, if the decision concerns the release of the program, releasing the program, if the decision concerns the removal of the program, removing the program.

## Description

### 1. Technical field

The present invention relates to a method for testing a program on a computer, a corresponding testing unit and computer program product.

### 2. The prior art

In order to ensure a proper operation of programs, particularly programs executed on an embedded system with real time requirements, it is necessary to perform rigorous testing in the course of developing and engineering such programs.

Currently employed tools for software testing include external devices which depend upon stimuli for indicating the state of a program being executed on a processing unit of a computer. In the course of testing, faults or errors are injected in response to the stimuli to test the program's reaction to a fault in that particular state.

A particular problem with external test devices - i.e. devices outside and/or in a vicinity of a processing unit - is due to an integration and miniaturization of components and signals in current processing systems which render difficulties in reaching information of interest, e.g. cache memory, internal registers and buses, and other on-chip logic of a processing unit. Due to a limited pin count a tapping of internal signals of interest is rather intricate.

Such testing is particularly demanding in the case of real-time systems and/or embedded systems which comprise highly integrated components and where test results have to be obtained without compromising a functional and timing behavior. Running a program under control of a debugger - i.e. a tool for finding causes of errors- and modifying the program by setting watch points or break points massively interferes functional and timing behavior which makes debuggers impractical for automated testing.

However, with regard to the increasing degree of automation in context of automation or industrial systems improved solutions for software testing will gain further importance.

It is therefore an objective of the invention to provide a method for testing a program in an efficient and reliable manner without interfering the underlying system, computing unit or its operating mode, such as an automation system or industrial controller.

### 3. Summary of the invention

This problem is according to one aspect of the invention solved by a method for testing a program on a computer,
the program comprising a plurality of instructions to be executed by a processing unit of the computer, the method comprising the steps of:
a) running at least one test on the program and generating at least one test result;
b) making at least one decision by evaluating the program depending on the at least one test result; wherein
c) the at least one decision concerns a modification of at least one feature of the program, a release of the program or a removal of the program,
if the decision concerns the modification of the program,
modifying the at least one feature of the program based on the at least one test result, repeating steps a) - c) on the modified program until the decision concerns a release of the program or a removal of the program,
if the decision concerns the release of the program,
releasing the program,
if the decision concerns the removal of the program,
means for removing the program.

Accordingly, the method is directed to testing a program on a computer. In other words, the method deals with software testing. For example, the program can be an application software or any other program, including a main program of a control unit, such as industrial controller.

In a first step, a test is applied on the program resulting in a test result. The test can be a system integrity test or any other test to check a feature of the program to be tested.

The feature can be any intended or predefined requirement, such as a system parameter, a functionality of the program or any other property of the program.

The test result can indicate whether the program meets the requirement or not, whether the program passed or failed the test. The test result is used to verify the program and to make a decision based on the test result. According to that, the program is modified, released or removed.

Accordingly, during modification, the feature of the program to be tested is modified or adapted according to the test result. This test result can be considered as a first test result of a first test. In this case, the program does not meet the requirement and cannot be released without one or more further tests.

Accordingly, during release, the program is released, especially deployed on the computer for usage. In this case, the program meets the requirement and can be released without any modification or further test. For example, referring to the above, the program meets a predefined memory consumption threshold after modification. Alternatively, during removal, the program is removed since the program does not meet the requirements after modification and several tests.

The modification can be related to the program itself or to the environment of the program.

In other words, the program meets gradually the requirements and the restrictions of the program are successively removed.

In one aspect, the program is a backup of a primary program, wherein the backup program is different from the primary program.

In another aspect, the difference between the backup and the primary program is that the backup program is a modified version of the primary program.

In another aspect, the backup and the primary program are executed in parallel at runtime.

Accordingly, a staged primary and backup mechanism is used in the present invention. The program to be tested is a different or modified backup or copy of the primary program and can be equally referred to as backup program. The backup program can be designed as new or updated version of the primary program. In other words, there are two versions of a program in a redundant system. Thereby, the primary program is executed in its normal or usual operating mode in parallel with the backup program. This way, the primary program, e.g. main program of an industrial controller can be executed as usual without being interrupted or being influenced in any way. Thus, downtimes of industrial plants cannot just be reduced, but prevented. Thus, downtimes can be prevented without any risks.

In other words, program runs in quarantine by using the primary and backup mechanism. The tests are performed to gradually or successively affirm that the program fulfills its tasks and actions reliably and fail-save.

In another aspect, the at least one test considers data of at least one test probe and/or at least one additional program code as input data.

Accordingly, the test uses input data for testing the program. The input data can be generated in different ways, e.g. by a test probe, which can be installed on the computer executing the program or any other unit of the redundant system. The term test probe is defined as means for accessing system data.
Additionally or alternatively, the input data can be generated by an additional program code.

In another aspect, the at least one test applies a logic check, limit constraints and/or a comparison based on the input data and/or other data.

Accordingly, any logic can be used for testing, considering discrete or continuous values. Further, limit constraints can be used, such as the aforementioned memory consumption threshold. Further, the input data of the program can be compared with other data, such as predefined values or according data, such as the memory consumption of the primary program.

In another aspect, the modification of the at least one feature is a restriction or an extension of the at least one feature, wherein the feature is an element selected from the group comprising:
resource profile, a resource, access right profile, an access right.

Accordingly, as mentioned further above, the modification can be considered as change or adjustment of the feature of the program, including restricting or extending the feature. Referring to the above, the exemplary resource memory consumption can be restricted or extended by decreasing or increasing the resource.

In another aspect, the method comprises the further step of running the program after releasing the program.

Accordingly, the released program can be used, such as deployed or executed. This way, the present invention ensures that solely verified or tested programs are used in industrial plants or any other system. Thus, the system functionality cannot be corrupted by an update of the program and other side effects or malfunction of the program and system is prevented.

Further, the invention is directed to a testing unit for testing a program on a computer, the program comprising a plurality of instructions to be executed by a processing unit of the computer, comprising:
Testing unit for testing a program on a computer, the program comprising a plurality of instructions to be executed by a processing unit of the computer, comprising:
   a) means for running at least one test on the program and generating at least one test result;
   b) means for making at least one decision by evaluating the program depending on the at least one test result; wherein
   c) the at least one decision concerns a modification of at least one feature of the program, a release of the program or a removal of the program,
if the decision concerns the modification of the program,
   means for modifying the at least one feature of the program based on the at least one test result, repeating steps a) - c) on the modified program until the decision concerns a release or a removal of the program,
   if the decision concerns the release of the program,
   means for releasing the program,
   if the decision concerns the removal of the program,
   means for removing the program.

A further aspect of the invention is a computer program (product) directly loadable into the internal memory of a computer, comprising software code portions for performing the steps of the above-mentioned method when said computer program (product) is running on a computer or on one of the above mentioned apparatus.

### 4. Short description of the drawings

In the following detailed description, presently preferred embodiments of the invention are further described with reference to the following figures:
- Fig. 1: shows a primary and a backup of a program according to an embodiment of the invention.
- Fig. 2: shows a flow chart for testing a program on a computer according to the invention.

### 5. Detailed description of preferred embodiments

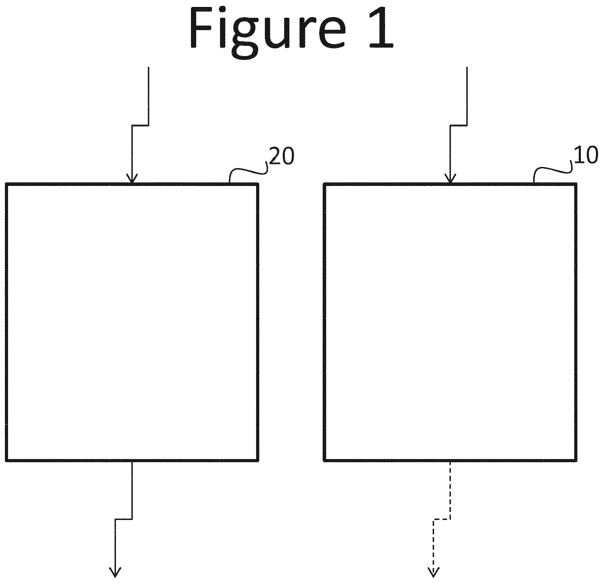

Figure 1 illustrates an exemplary primary and backup mechanism. The program to be tested 10 can be a backup of a primary program 20 or any other program suitable to comprise a program to be tested without interfering the underlying system, such as a newly installed Software or new version of the primary program. The backup program 10 is assigned an infant role or is executed with restrictions before being tested.

For example, the backup program can have limited rights to access resources according to its intended functionality such as memory consumption, execution time, access rights. In other words, it has a restricted resource profile. This way, safety goals, system integrity and security are ensured. The backup program is not executed without restrictions or supervision before being tested. To the contrary, the primary program can be executed without being influenced by testing in its normal or operating mode.

With regard to an automation system, for example the primary program e.g. main program is executed on an industrial controller of an automation system. The industrial controller can control and monitor the automation system as usual without being influenced by testing. To the contrary, the backup program is restricted in its functionality or operating mode, such as restricted actuators or control of actuators, as indicated by dashed line.

Tests are run on the program to be tested for accepting or discarding it depending on the test results.

The tests can be system integrity tests or functional tests and can be directed to e.g. a resource profile, such as execution time, memory consumption e.g. in comparison to the restricted resource budgets or profile, access rights, communication connections, access violations e.g. against the imposed restrictions, or the resource profile of the backup program can be compared to the resource profile of the primary program.

The backup program can be modified depending on the test results by extending the access rights or its resource budgets up to primary rights and maximum budgets depending on a defined system policy considering e.g. system application context, system utilization, test results, needed confidence levels.

Alternatively, the backup program can be released or removed depending on the test results. The backup program is released after passing a test or is removed after failing a test.

The backup program can be tested step by step. First, the backup program might fail a first test. Then, the backup program is modified and tested again. The modified backup program might pass the second test and can be released.

In other words, most of the time, the program has to pass several tests and e.g. the resource profile is gradually released or extended before being released.

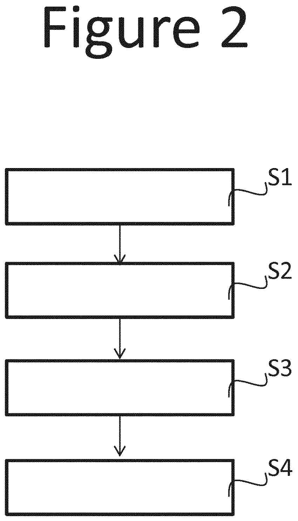

Fig. 2 shows a flow chart for testing the program on a computer according to the invention, comprising the method steps S1 to S4.

## Claims

1. Method for testing a program (10) on a computer,
the program comprising a plurality of instructions to be executed by a processing unit of the computer, the method comprising the steps of:
a) running at least one test on the program (10) and generating at least one test result (S1);
b) making at least one decision by evaluating the program (10) depending on the at least one test result (S2); wherein
c) the at least one decision concerns a modification of at least one feature of the program (10), a release of the program (10) or a removal of the program (10),
if the decision concerns the modification of the program (10),
modifying the at least one feature of the program (10) based on the at least one test result, repeating steps a) - c) on the modified program (10) until the decision concerns a release or a removal of the program (10) (S3),
if the decision concerns the release of the program (10),
releasing the program (10) (S4),
if the decision concerns the removal of the program (10),
removing the program (10) (S4).

2. Method according to claim 1, wherein the program (10) is a backup of a primary program (20), wherein the backup program (10) is different from the primary program (20).

3. Method according to claim 1 or claim 2, wherein the difference between the backup (10) and the primary program (20) is that the backup program (10) is a modified version of the primary program (20).

4. Method according to claim 1 - 3, wherein the backup and the primary program (10, 20) are executed in parallel at runtime.

5. Method according to any one of the preceding claims,
wherein the at least one test considers data of at least one test probe and/or at least one additional program code as input data.

6. Method according to claim 5, wherein the at least one test applies a logic check, limit constraints and/or a comparison based on the input data and/or other data.

7. Method according to any one of the preceding claims,
wherein the modification of the at least one feature is a restriction or an extension of the at least one feature, wherein the feature is an element selected from the group comprising:
resource profile, a resource, access right profile, an access right.

8. Method according to any one of the preceding claims,
wherein the method comprises the further step of running the program (10) after releasing the program (10).

9. Testing unit for testing a program (10) on a computer, the program (10) comprising a plurality of instructions to be executed by a processing unit of the computer, comprising:
a) means for running at least one test on the program (10) and generating at least one test result;
b) means for making at least one decision by evaluating the program (10) depending on the at least one test result; wherein
c) the at least one decision concerns a modification of at least one feature of the program, a release of the program or a removal of the program,
if the decision concerns the modification of the program (10),
means for modifying the at least one feature of the program (10) based on the at least one test result, repeating steps a) - c) on the modified program (10) until the decision concerns a release or a removal of the program (10),
if the decision concerns the release of the program (10),
means for releasing the program (10),
if the decision concerns the removal of the program (10),
means for removing the program (10).

10. A computer program product directly loadable into internal memory of a computer, comprising software code portions for performing the steps according to any of the preceding claims 1 to 8 when said computer program product is running on a computer.
